# EUROPEAN PATENT APPLICATION

(11) **EP 4 436 160 A1**
(43) Date of publication of application: **25.09.2024**
(21) Application number: 24165366.6
(22) Date of filing: 21.03.2024
(51) Int. Cl.: H04N 7/14

(54) **TELEPRESENCE SYSTEM**

(30) Priority: 21.03.2023 US 202363453634 P
(71) Applicant: Disney Enterprises, Inc., Burbank, CA 91521 (US)
(72) Inventor: DRAKE, Edward, Agoura Hills (US); POPP, Joseph M., Cerritos (US); SCOTT, David S., Los Angeles (US); DAWES, Emme Anaïs, Calgary (CA); BROWN, Austin Riley, Moses Lake (US)
(74) Representative: Jarrett, Daniel Phillip

(57) **Abstract**

The present disclosure relates generally to a system for remote interactions. A telepresence system may include an interactive device located at a first location; a user device located at a second location separate from the first location. The user device may be configured to receive a user input. An actuator may be communicatively coupled to the user device and the interactive device, the actuator being configured to generate a physical output at the first location based on the user input at the second location.

## Description

### FIELD

The present disclosure relates generally to video conferencing and telepresence systems.

### CROSS-REFERENCE TO RELATED APPLICATIONS

This application claims the benefit of priority under 35 U.S.C. § 119(e) and 37 C.F.R. § 1.78 to U.S. provisional application no. 63/453,634 filed on March 21, 2023, titled "Telepresence Physical Indicator" which is hereby incorporated herein by reference in its entirety.

### BACKGROUND

As more people work remotely or otherwise are looking to digitally connect with others in different locations, video conferencing and other telepresence, communication, or connectivity systems are being leveraged to enhance such digital interactions. However, such systems can be limited in interactions. It is difficult for people to physically indicate, identify, move, or otherwise interact with objects in a local environment being displayed or connected via the digital connection (e.g., from a remote environment). For example, on a set or studio (e.g., for content production), a virtually connected director, producer, or other member of a creative team who is viewing the set remotely may have a difficult time identifying particular locations or objects that the person wishes to have moved, changed, or the like, as the person's pointing through the virtually connected camera may not be easily identified or correlated with an object or location on the other end of the digital connection (i.e., the set or studio).

### BRIEF SUMMARY

Aspects and features of the present disclosure are set out in the appended claims.

### OVERVIEW OF DISCLOSURE

In one embodiment, a telepresence system includes: an interactive device located at a first location; a user device located at a second location separate from the first location. The user device is configured to receive a user input; an actuator communicatively coupled to the user device and the interactive device, the actuator being configured to generate a physical output at the first location based on the user input at the second location.

Optionally in some embodiments, the actuator includes a light emitter including one or more of a laser, a light-emitting diode, a fluorescent light, an incandescent light, an infrared light source, an ultraviolet light source, and is configured to identify an area or object within the first location by illumination.

Optionally in some embodiments, the light emitter further includes: an objective lens; and an image lens.

Optionally in some embodiments, the actuator includes one or more of a virtual output to the user device, a mechanical pointer, or a fluid emitter.

Optionally in some embodiments, the actuator includes an actuator control configured to change a position of the actuator relative to the interactive device.

Optionally in some embodiments, the actuator control includes a first pivot configured to move about a first axis and a second pivot configured to move about a second axis orthogonal to the first axis.

Optionally in some embodiments, the first location includes at least one of a content production set, a remote scouting location, a conference room.

Optionally in some embodiments, the interactive device further includes a mobility module configured to move the interactive device in the first location.

Optionally in some embodiments, the interactive device further includes one or more sensors configured to detect an obstacle, and the mobility module is configured to avoid the obstacle.

Optionally in some embodiments, the mobility module is configured to move the interactive device while in contact with a surface in the first location, or through air in the first location.

Optionally in some embodiments, the interactive device includes: a base; a mobility module coupled to the base and configured to move the interactive device in the first location; a support structure extending from the base; and an actuator control coupled to the support structure. The actuator is coupled to, and independently moveable relative to, the support structure by the actuator control, the mobility module and the actuator control are communicatively coupled to the user device and configured to receive the user input, the mobility module is configured to move the interactive device based on the user input, and the actuator control is configured to actuate the actuator based on the user input.

In one embodiment, a method of interacting with a remote environment includes: communicatively coupling at least one user device in the remote environment and an interactive device in a local environment; receiving a user command at the at least one user device; transmitting the user command to the interactive device; actuating an actuator of the interactive device to generate a physical output in the remote environment based on the user command.

Optionally in some embodiments, the actuator includes a light emitter including one or more of a laser, a light-emitting diode, a fluorescent light, an incandescent light, an infrared light, or an ultraviolet light, and the method further includes identifying an area or an object within the local environment by illumination.

Optionally in some embodiments, generating the physical output in the local environment includes providing a virtual output to the user device, actuating a mechanical pointer, or emitting a fluid.

Optionally in some embodiments, the method includes changing, via an actuator control of the actuator, a position of the actuator relative to the interactive device.

Optionally in some embodiments, the method further includes changing, via an actuator control of the actuator, a position of the actuator relative to the interactive device by rotating at least one of a first pivot of the actuator control about a first axis or a second pivot of the actuator control about a second axis orthogonal to the first axis.

Optionally in some embodiments, the method further includes calibrating the interactive device by aligning a physical location of the actuator with an interactive control feature.

Optionally in some embodiments, the method further includes calibrating the interactive device by detecting a location of the physical output within the local environment and adjusting a location of an interactive control feature to the location of the physical output.

Optionally in some embodiments, the method further includes actuating the actuator includes directing the physical output toward an object or a person within the local environment based on the user command.

In one embodiment, an interactive device for a telepresence system includes: a base; a mobility module coupled to the base and configured to move the interactive device in a first location; a support structure extending from the base; an actuator; and an actuator control coupled to the support structure and the actuator. The actuator is coupled to, and independently moveable relative to, the support structure by the actuator control, the mobility module and the actuator control are communicatively coupled to a user device and configured to receive a user input from the user device, the mobility module is configured to move the interactive device based on the user input, and the actuator control is configured to actuate the actuator based on the user input.

The present disclosure relates generally to a system for remote interactions. A telepresence system may include an interactive device located at a first location; a user device located at a second location separate from the first location. The user device may be configured to receive a user input. An actuator may be communicatively coupled to the user device and the interactive device, the actuator being configured to generate a physical output at the first location based on the user input at the second location.

### BRIEF DESCRIPTION OF THE DRAWINGS

FIG. 1 is a diagram of an interactive system.
FIG. 2 is a diagram of an interactive device positioned within a location.
FIG. 3 is a flow chart illustrating an interactive method.
FIG. 4A is a perspective view of an embodiment of an interactive device.
FIG. 4B is a perspective view of an embodiment of an actuator control of any interactive device herein.
FIG. 4C is a schematic of an embodiment of an light emitter of any interactive device herein.
FIG. 5A is a schematic of an embodiment of the interactive system of FIG. 1.
FIG. 5B is a schematic of an embodiment of an interactive system of FIG. 1.
FIG. 5C is a schematic of an embodiment of an interactive system of FIG. 1.
FIG. 6 is a simplified block diagram of components of a computing system of the interactive system of FIG. 1.

### DETAILED DESCRIPTION

The present disclosure relates to digital connectivity and interactive systems, such as telepresence and/or video conferencing systems. In one example, a system to enable physical interactions (e.g., identification, movement, etc.) with one or more objects within a location viewable through the digital connection. For example, an interactive device, such as a robotically controlled module, can be positioned within a location (e.g., a local location or Location 1) and actuated by a user in a different or remote location with respect to the interactive device (e.g., Location 2), such as being actuated by a user on a remote side of the digital connection. The interactive device may allow a remote user to actively engage within the location, generating a more interactive experience that helps to eliminate issues that can be generated by remote digital connections.

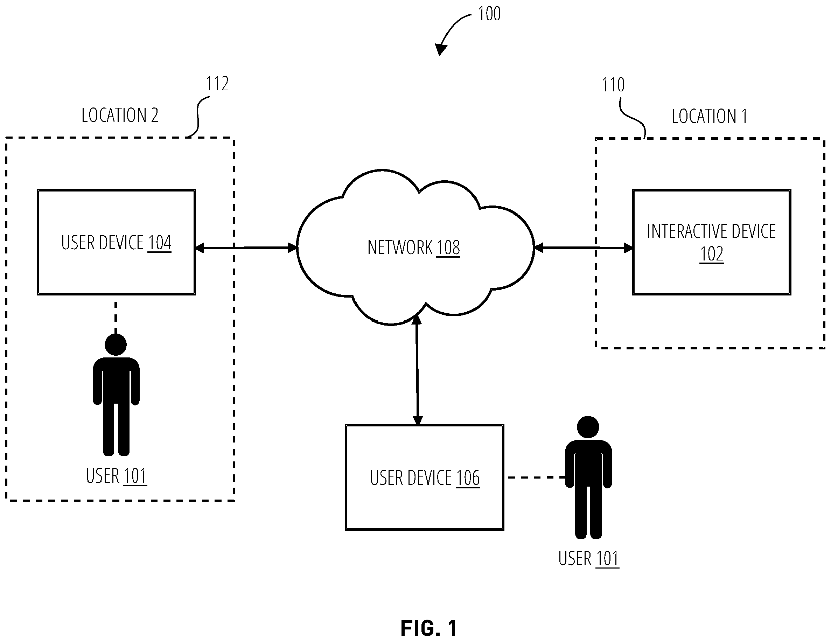

FIG. 1 illustrates a system 100 for enabling real world or in-location actuation of physical effects via an interactive device 102. The system 100 may include a network 108 that may communicatively couple different devices, e.g., user device 104, user device 106, and interactive device 102 together to allow data to be transferred therebetween. The user devices 104 and 106 may be associated with one or more users 101. For example, the network 108 may include Satellite, Fiber, Cable, Microwave, Cellular transmissions and other types of wireless or wired connections including Wi-Fi, Ethernet, Bluetooth, etc. In some embodiments, the network 108 may include different nodes or communication points (e.g., the user devices 104, 106 may communicate to a hub or router, which then separately connects to the Internet to connect to the interactive device 102, such as the cloud). In short, the network 108 may depend on the desired types of communication methods and protocols, but is meant to encompass various types of electronic communications. Further, as can be appreciated, as much of the communication between the user devices 104, 106 and interactive device 102 may include video or audio conferencing, the network 108 may be configured to transmit data, such as video or still images, audio, and other communication data. In some instances, a user interface, such as a conferencing platform with certain icons or features (e.g., chat or share screen features) may be utilized to enable the communication between devices 102, 104, 106 and may include an interactive control feature (e.g., reticle) to allow a user to control the interactive device 102.

The user devices 104, 106 may be substantially any type of computing device, e.g., smart phones, tablets, computers, virtual or augmented reality devices (e.g., head mounted displays, smart glasses, etc.), wearable devices, set top boxes, or the like. The user devices 104, 106 may also include or be coupled to input/output devices, such as cameras, displays, microphones, and the like (see, e.g., FIG. 1 and corresponding description). For example, the user devices 104, 106 may be configured to capture user outputs, such as facial images, audio, physical gestures, and the like, and similarly may be able to display the captured outputs to other users. For example, the user devices 104, 106 may be connected via the network 108 in a video conferencing environment to allow users in different locations to communicate with one another, or in a volumetric capture environment that captures and transmits a digital representation of the user. In many examples, a different number of user devices can be connected to the network 108. For example, just one user device 104, two user devices (e.g., user devices 104 and 106), or more than two user devices.

The interactive device 102 is configured to generate physical outputs (e.g., light) in response to user commands, such as those transmitted from one or both user devices 104, 106. The interactive device 102 may be positioned in a first location 110, (e.g., Location 1 or a local environment), and be controllable from a user device 104, 106 positioned in another location (e.g., a remote environment or second location 112, such as Location 2). In some embodiments, however, the user device 104, 106 controlling the interactive device 102 may also be located in the same location, e.g., Location 1.

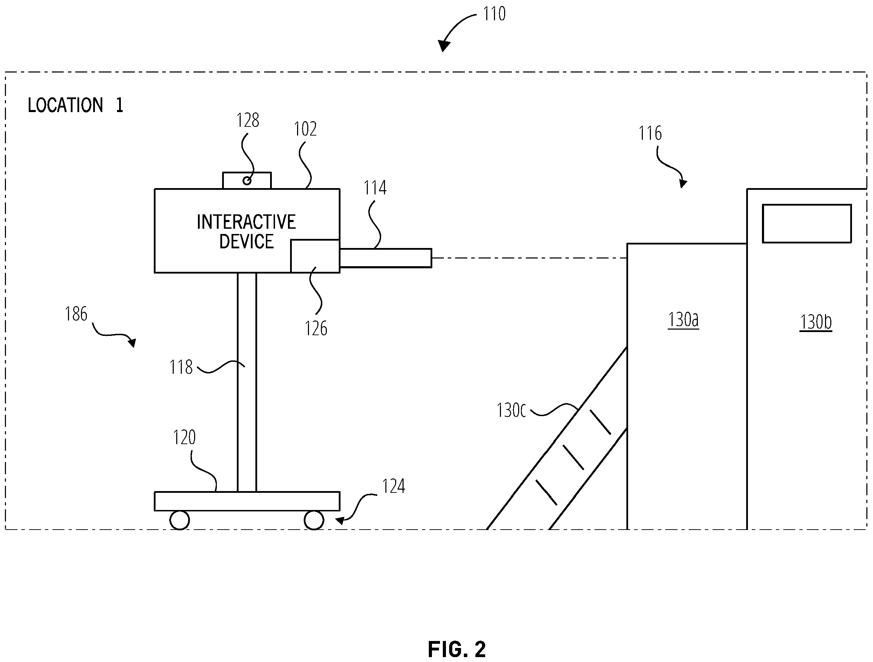

With reference to FIG. 2, an example of the first location 110 including the interactive device 102 is shown. In this example, the first location 110 or the interactive device 102 location is a set 116 (e.g., content production set) that may include a number of objects 130a, 130b, 130c, such as props, backgrounds, people such as actors, actresses, or the like. It should be noted that although a set 116 is shown as Location 1, other types of environments are envisioned, e.g., buildings, homes, offices, outdoor locations, schools, remote scouting locations, conference rooms, or other areas where people may include video information or participate in remote work or video conferencing. As such, the objects 130a, 130b, 130c may be varied based on the type of environment and are meant to be illustrative only.

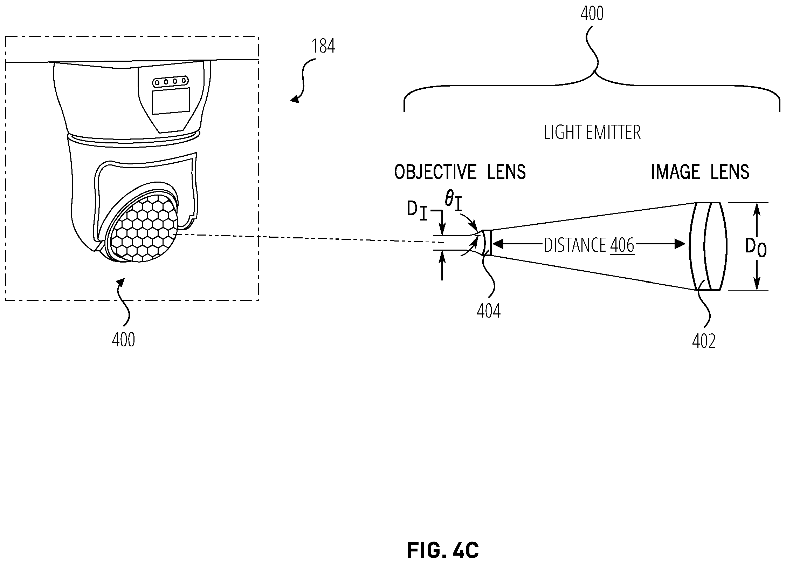

The interactive device 102 may include or be communicatively coupled to an actuator 114 or indicator. The actuator 114 is configured to generate a physical output, such as light, a mechanical pointer (e.g., rod), fluids (e.g., air or water), or the like, and/or may be configured to generate a virtual output onto the user devices 104, 106 (e.g., be aligned with a physical object but generate a visual display rather than a physical output). The actuator 114 will depend on the desired type of output or indication mechanism, but in one example, may be a light source that can generate a light, such as a laser beam source, a light-emitting diode (LED), a fluorescent light source, an incandescent light source, an infrared light source, an ultraviolet light source, or the like, that may be used to identify an area within the set 116, e.g., illuminate an object by generating a light spot or dot on one of the objects 130a, 130b, 130c. It should be noted that the generated light may be visible or invisible spectrums. The light source may be in the form, for example, of a lamp, flashlight, spotlight, pointer, or the like and may include various optical elements to change output characteristics of the light. For example, the actuator 114 may include a light source and lens that acts as a beam expander or a beam collimator to change the width and/or shape of the beam as may be desired. See, e.g., FIG. 4C and related discussion.

In some embodiments, the actuator 114 may include one or more of a light source, multiple light sources that mark (e.g., persistently mark) one or more of objects 130a,130b,130c, a fluid stream (e.g., a squirt gun), a soft foam projectile, an air horn, a pressurized container that dispenses a colored, string-like substance (e.g., a foamy polymer that rapidly expands into a string-like form upon release) when activated.

The actuator 114 may be movable relative to the interactive device 102, e.g., may rotate, translate, articulate, expand/retract, oscillate, or the like, to enable flexible positioning based on user commands. As one example, the actuator 114 may be mounted on a joint to have 2 degrees of freedom, e.g., a pan-tilt joint, or may be fully rotatable, depending on the desired functionality. As one example, the actuator 114 may be motor controlled and configured to rotate and/or move vertically, horizontally and/or diagonally to move a position of the physical output.

In some examples, the actuator 114 may include a stable element, such as an immovable light source, and a movable element (e.g., a lens or a movable reflector such as a mirrored surface) that may be moved relative to the light source to change an emission location and indicator position of the light. Similar implementations are contemplated for other types of physical output.

The interactive device 102 may include a controller or settings that change, vary, and/or inhibit certain features. For example, the interactive device 102 may include a sleep mode or deactivation feature that prevents actuation of the actuator 114 or other elements (e.g., mobility module 124). The controller or settings may be password or permission controlled, such that changes may require a user name and/or password or other authentication process to change or activate.

The interactive device 102 may also include a mobility module 124 that enables the interactive device 102 to move within the set 116. For example the mobility module 124 may include one or more motors or servos and one or more wheels, tracks, or the like, that may be moved by the motor. The mobility module 124 may be configured to move the entire interactive device 102 or may be configured to move a portion of the interactive device 102, e.g., the actuator 114. In other examples, the actuator 114 may be movable while the interactive device 102, may be configured to be secured in position, or otherwise not moved during use.

In some embodiments, the mobility module 124 may include one or more sensors, such as detectors that can detect various obstacles or other features in the environment. For example, the mobility module 124 may include one more cameras, light detection and ranging ("LiDAR"), or the like, that can be used to identify features or help determine whether the interactive device 102 may collide with or impact an object within the environment of Location 1. Such sensors can be used to prevent certain motions and/or generate user alerts or error if a command is received that would likely result in a collision with an object.

The interactive device 102 may further include a support structure 186, such as a stand 118 and base 120. The support structure 186 may be configured to stabilize and support the interactive device 102 within the environment, as well as enable the interactive device 102 to be repositionable relative to the objects object 130a, 130b, 130c. For example, the stand 118 may be telescoping or otherwise variable to allow the height of the interactive device 102 to be changed relative to the objects object 130a, 130b, 130c, such as in instances when a user may wish to point at something higher or lower than a current height of the interactive device 102 or outside of a current range of motion of the actuator 114. The support structure 186 including the stand 118 and/or the base 120 may include active stabilizers, such as a gimbal, or the like, that may act to keep the interactive device 102 in a desired orientation (e.g., ensure a stable height for the actuator 114 or the like).

The interactive device 102 may also include a display 126 and/or one or more cameras 128, where the display 126 may be configured to display information, such as video or still images, and the camera 128 may be configured to capture information regarding the set 116. Optionally, the interactive device 102 may include a microphone to capture audible data, such as talking or the like, from people within the set 116. Optionally, the interactive device 102 may include a speaker 176 such that the remote user 101 can speak or relay other sounds from the second location 112 to the first location 110. In one example, the interactive device 102 may include a fully rotational display 126 and/or one or more cameras 128 to enable multidirectional viewing and display, e.g., a full 360 degree rotation for the camera 128 and/or display 126 which can allow the cameras 128 to capture different areas of the environment without the interactive device 102 needing to be moved and/or for the display 126 to be visible to users positioned at different angles relative to the interactive device 102.

In some embodiments, the interactive device 102 may include an interactive control feature (e.g., an aiming display or mechanism), such as a reticle, that could be used to allow a user to understand a position of the to-be actuated element (e.g., a laser beam) and allow more accurate commands to be transmitted to the interactive device 102. This interactive control feature may be virtual or may include a feature (e.g., filter) over the lens of the camera 128 to allow the field of view and focus location of the camera 128 to be aligned with an output location for the actuator 114. In other examples, the aiming mechanism may be a digital output that corresponds to a position of the actuator 114.

In operation, the user devices 104, 106 may be connected to the interactive device 102 and be configured to direct or command the interactive device 102 within the set 116. For example, a user interacting with user device 104 may command the interactive device 102 to move closer to object 130a and may actuate the actuator 114 to generate a physical output, such as directing a laser beam onto the surface of the object 130a. In this manner, the user 101 can remotely generate a physical output within a local location, e.g., the first location 110, to enable the user 101 to interact with other users, which may be present in the first location 110, more completely than is conventionally offered via video conferencing systems.

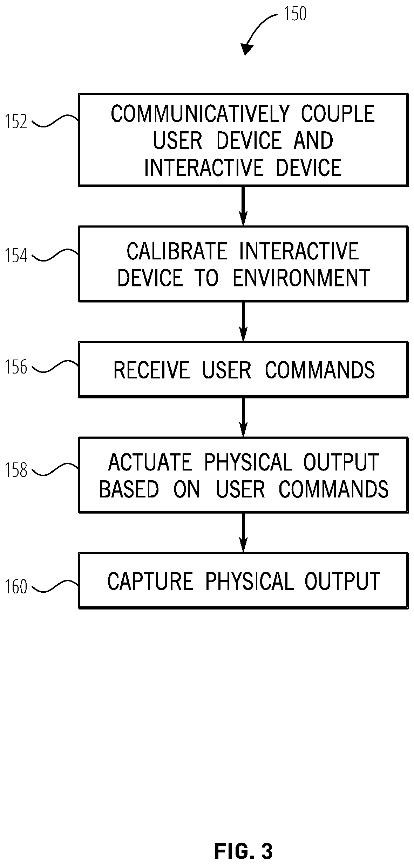

FIG. 3 illustrates an example method 150 of utilizing the system 100. Although the example system 100 depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

The method 150 may begin with operation 152, where the network 108 communicatively couples the user device 104 and the interactive device 102. Optionally, additional user devices, such as user device 106 may be communicatively coupled together as well. As one example, the interactive device 102 and the user devices 104, 106 may be connected via a videoconferencing platform or system allowing users to share video and audio together across the network 108.

Optionally, method 150 may include operation 154, which may occur before, after, or during operation 152, where the interactive device 102 may be calibrated to the environment, e.g., set 116 or other areas surrounding the location, e.g., the first location 110. For example, the actuator 114 and/or mobility module 124 may be optimized for the particular environment, such as by determining a desired position of the interactive device 102 relative to objects 130a, 130b, 130c to enable a preferred physical output (e.g., size of the light on the object 130a surface), or the like. The calibration operations may depend on the type of actuator 114 and set 116 and can be varied as desired.

As one example, in instances where the interactive device 102 may include a laser as the actuator and a reticle as the interactive control feature for enabling user commands, the calibration operation 154 may include a "sighting in" or other matching operation that aligns the physical location of the laser beam with the reticle. Once matched, the reticle could be used visually (e.g., by appearing on the display of the user device 104 commanding the interactive device 102) to indicate the location of the output of the actuator 114, e.g., the location of the laser beam on object 130a. As an example, a manual operation could be completed that focuses the camera 128 of the interactive device 102 with the "dot" of the laser beam on the object 130a, such that the dot will be visible in the video feed transmitted the to the commanding user device, e.g., user device 104. The user could then direct the interactive device 102 to move the reticle (which may be a digital icon, such as crosshairs) to align or overlay the dot on the video. Once aligned, the user could "lock" or set the reticle in position, allowing accurate control of the actuator 114 relative to the location.

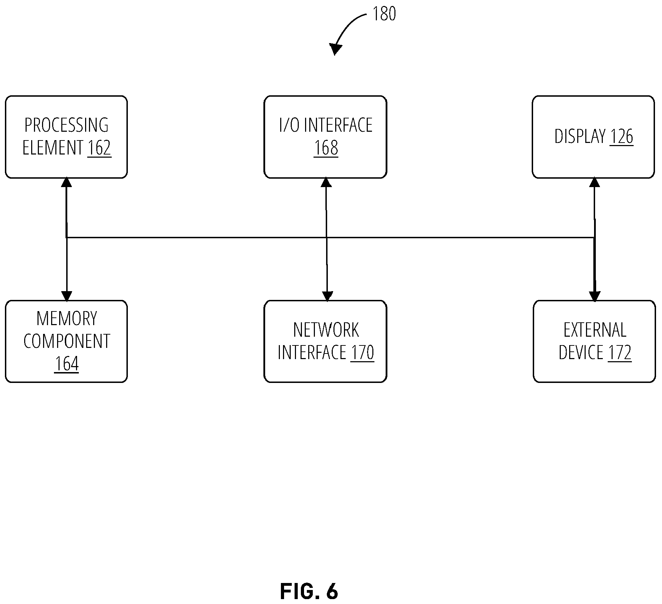

As another example, the calibration operation 154 may include utilizing algorithms, such as computer vision or the like, to detect the output of the actuator 114 within the set 116, e.g., detect the location of the laser dot on the object 130a, and then a processing element (see, e.g., Fig. 6 and related discussion) or other device could be used to adjust a location of the reticle to the output location of the laser dot and "lock" in the position. Such calibration operation 154 may also be done in a similar manner utilizing a trained machined learned model. The calibration operation 154 may be performed by the user 101 or by a third party such as an assistant, or may be executed automatically without intervention of a person.

As another example, a coded signal, such as a digital signal, may be transmitted in a laser dot. The coded signal may be visible or invisible to the human eye (e.g., may be too fast for a human to perceive). The system 100 may receive an image of the coded signal or laser dot and use that to "lock" the position of the reticle. In other examples, the calibration operation 154 may be a hybrid between manual and automatic methods disclosed herein.

In operation 156, the interactive device 102 receives user commands. In one example, the user commands are received from a remote device, such as user device 104 located in Location 2 and not in Location 1. However, in some instances, the interactive device 102 may receive commands from two or more users, where one of the users may be located in the same location as the interactive device 102, or all users may be located in one or more different locations than the interactive device 102. For example, the user of user device 106 may be positioned within the first location 110 (e.g., Location 1) and may alternate in commanding the actuator 114 or the like to identify different objects object 130a, 130b, 130c or portions of objects object 130a, 130b, 130c within the set 116. The user commands may be input via an input/output interface or other control interface for the user device 104 in the second location 112 (e.g., Location 2). For example, a user can utilize a mouse, trackpad, keyboard, camera (e.g., gaze detection), joystick, controller (e.g., virtual reality controller, head mounted display controller), audio, or the like, to command the interactive device 102 to move (e.g., actuate the mobility module 124) and/or actuate the actuator 114, as well as vary characteristics of the physical output (e.g., change a color, brightness, intensity, speed, or the like of the physical output). In some embodiments, a user interface associated with the interactive device 102 may be configured to prevent overlapping or simultaneous commands from different user devices from being acted on by the interactive device 102. For example, in some instances a command function may be selected to provide instructions to the interactive device 102 and the user interface and can be selected such that only a single user device (e.g., a commanding user device) can select the command function at a time. In some embodiments, the receipt of user 101 input commands may be disabled temporarily by the user 101 (e.g., for privacy purposes when the input is gaze-based). Additionally, the commanding user device can be changed as needed, e.g., command control can be handed off to different user devices as desired. For example, the user interface for the interactive device 102 may include a command option that can be activated by different user devices (e.g., transitioning different devices into a commanding user device). In some instances, only a single user device can activate the command option at a time, which can help to prevent multiple users from trying to control the interactive device 102 simultaneously. In some embodiments, more than one user 101 may provide commands to the interactive device 102 (e.g., from respective user devices). The interactive device 102 may vary a characteristic of the physical output based on each user, such as to identify the user 101 making the command. For example, when multiple users 101 issue commands to the interactive device 102, the interactive device 102 may generate different light colors, patterns, shapes, letters, numbers, or other symbols to indicate which user 101 is associated with which command. The different lights may be directed toward different objects 130a, 130b, 130c or the same objects within the first location 110. These physical outputs may be displayed simultaneously, nearly simultaneously, or in sequence.

In operation 158, the interactive device 102 may actuate the actuator 114 to generate the physical output based on the commands. For example, the interactive device 102 may cause a laser beam to be generated and direct the laser beam towards the object 130a as instructed by the user. As another example, the interactive device 102 may cause a fluid output (e.g., water stream or air stream) to be directed towards an object 130a or person within the set 116.

In operation 160, optionally the interactive device 102 and/or user device 104, 106 may capture the physical output. For example, the camera 128 of the interactive device 102 may be configured to be directed in a similar direction as the physical output (e.g., aligned with actuator 114) so that the commanding user device can receive feedback on the physical output. This feedback or visual capture helps to allow a commanding user to update position or orientation information of the actuator 114 (e.g., change a height or a position of the interactive device 102) to change the location of the physical output, e.g., move the laser beam relative to the object 130a. In many examples including the camera 128 or other feedback device on the interactive device 102 (rather than relying on a secondary device, such as user device 106 to capture the information) helps to ensure that the alignment of the output is more accurately detected and corrected if needed. Further, in some embodiments, the camera 128 can act as a virtual lens for the commanding user to allow the user to more accurately steer or control the interactive device 102, e.g., view from a first person perspective or act as the "eyes" of the user.

In various examples, the system 100 may include a remotely-controlled robotic device (e.g., interactive device 102) that can be controlled within a conferencing or other multi-user interactive system to allow a user located remotely from the interactive device to more actively engage within the environment, even though the remote user is not physically located within the environment. Further, the system 100 may help to improve even non-remote interactions. For example, a user can utilize the user device 104, such as by wearing a head mounted display or including another display and controller, and be able to actuate the actuator 114 to accurately "point" or identify features within the Location 1, that may not otherwise be readily or accurately identifiable by the user or another user at the same location. For example, the user can easily illustrate via the actuator 114 where the user's gaze is directed within the Location 1, helping to confirm the command "move this object to this location" without resulting in conjecture or uncertainty due to unclear gestures or the like.

As another example, the system 100 could be utilized to help identify user attention or user gaze during a digital interaction. For example, the user device 104 could be configured to detect a user gaze location, such as by one or more cameras that are directed towards the user's face, and the interactive device 102 could be commanded to actuate based on gaze. Continuing with this example, in a screening or review of content, such as a movie, users could utilize the interactive device 102 and gaze tracking to actuate a laser dot or other physical effect to identify locations on a screen displaying the content and potentially identify salient regions of a video frame. As another example, a group of users visiting the set 116 could actuate the interactive device 102 or groups of interactive devices 102 to help visualize where the users were directing their gazes. This can also be used to provide feedback to the users via the interactive device 102 and reflect a more precise location that the user is meaning to identify within the set 116 and adjustments can be made when the actuator 114 is identifying a different object or location than the user intended.

It should be noted that although the various examples described herein are described with respect to a physical output, in some embodiments, the actuator 114 may be configured to generate a virtual output. In other words, the actuator 114 may be configured to generate an output that may be visible via the display screen or on the user devices 104, 106 (e.g., a digital overlay) that may not be visible directly in the physical environment, e.g., Location 1.

Other examples of the system 100 may include attention or focus verification, e.g., remote education or testing can be improved by utilizing the interactive device 102 to provide an output (virtual or physical) based on the gaze direction of the user, which can help identify whether the user is focusing on a desired location.

In various examples, the reticle which may be a digital icon or overlay that may be positioned over or as a feature to be actuated on a video conferencing system, could be used to allow users to activate the feature and locking/alignment steps as needed based on calibration, as well as to allow a user to activate the digital icon (e.g., reticle icon) to activate the interactive device 102.

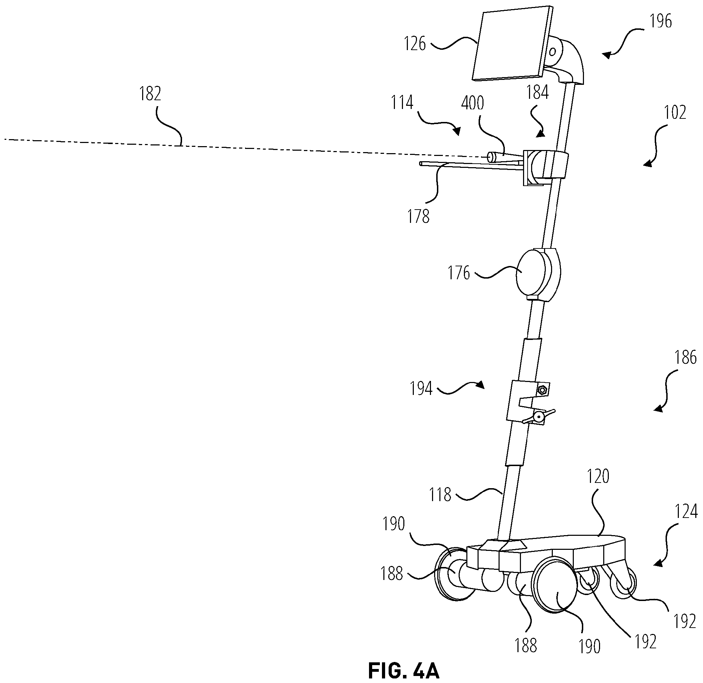

With reference to FIG. 4A - FIG. 4C, an embodiment of the interactive device 102 for use with the system 100 is shown. The interactive device 102 includes an actuator 114 (including an actuator control 184, physical portion 178, and a physical output emitter 400), a support structure 186 (including a stand 118, a base 120, a height adjuster 194), a mobility module 124 (including a spacer 188, a driver 190, and a follower 192), a display 126, a speaker 176, and a display control 196. In some examples, the physical output emitter 400 may be a light emitter (hereinafter "light emitter 400") configured to output a light 182.

The physical portion 178 may include a pointer, manipulator, robot arm, or other structure capable of indicating or manipulating one or more objects such as the objects 130a, 130b, 130c. The light emitter 400 is configured to emit light, either visible or invisible. The light emitter 400 is discussed in more detail with respect to FIG. 4C.

The support structure 186 provides the structure for components of the interactive device 102. In some examples, the support structure 186 may include a base 120. The mobility module 124 may be coupled to a portion of the support structure 186 such as the base 120. The stand 118 may extend upward from the base 120. The stand 118 may include a height adjuster 194 that can enable portions of the interactive device 102 to be adjusted up or down, such as to match a desired height. For example, the height adjuster 194 may be adjusted up or down to match the height of a person in the first location 110 using the interactive device 102. The height adjuster 194 may be manually adjusted, or may be automatically adjusted such as via a motor, servo, or other similar actuator.

As discussed above, the mobility module 124 may move the interactive device 102 within its environment, such as within the set 116. In the example shown, the mobility module 124 may include one or more drivers 190 that contact a surface in the first location 110 and are configured to move the interactive device 102 over the surface. The drivers 190 may be wheels, tracks, or the like coupled to one or more motors, engines, servos, or other actuators to enable the interactive device 102 to move. The drivers 190 may be separated from one another by one or more spacers 188. The spacers 188 may be selected to locate the drivers 190 sufficiently apart from one another such as to aid in stability of the interactive device 102. The drivers 190 may be operated at different speeds and/or directions to cause the interactive device 102 to follow a path, turn, move in a straight line, etc. The mobility module 124 may also include one or more followers 192 such as wheels or casters that also aid in stability of the interactive device 102.

In some embodiments, the mobility module 124 may include devices that enable the interactive device 102 to fly through the air, move through a liquid such as water, or move along a track. For example, the interactive device 102 may be part of an aerial drone and the mobility module 124 may include one or more thrusters (e.g., propellers), control surfaces, wings, avionics, etc. that enable the interactive device 102 to hover or fly through the air in the set 116 area. In another example, the mobility module 124 may be a crane or part of a crane and the interactive device 102 is moved around the set 116 on the arm of the crane.

In some embodiments, the mobility module 124 and one or more sensors coupled to the interactive device 102 may enable the interactive device 102 to avoid collisions with objects 130a, 130b, 130c and/or people in the first location 110. For example, the interactive device 102 may include a camera 128 that captures a 360° field of view of the surroundings in the first location 110.

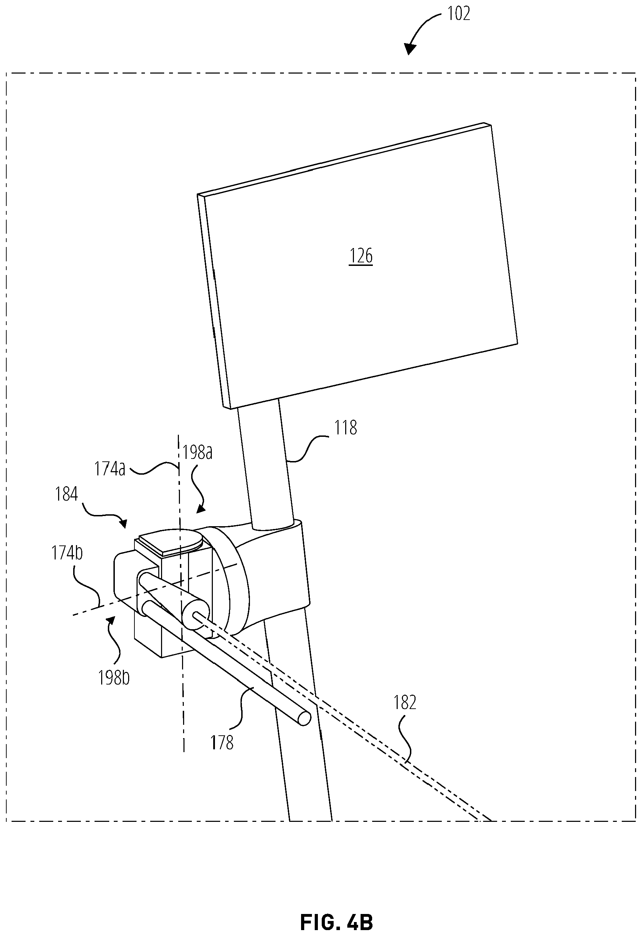

With reference to FIG. 4B, an example of an actuator 114 is shown. The actuator 114 includes an actuator control 184, a physical portion 178, and a physical output emitter 400 (e.g., light emitter 400). The actuator control 184 includes a first pivot 198a that pivots about a first axis 174a and a second pivot 198b that pivots about a second axis 174b. The first pivot 198a and/or the second pivot 198b may be manually or automatically adjusted, such as with one or more motors, servos, or other actuators. The actuator control 184 may move the actuator 114 independently from other portions of the interactive device 102, such as the mobility module 124, the base 120, the support structure 186, the display 126, etc. Thus, the actuator control 184 can enable the interactive device 102 to position the physical portion 178 or the light emitter 400 in many areas within a set 116, such as to shine a light 182 on an object 130a, 130b, or 130c. In other examples, the actuator control 184 may include a gimbal or other device that enables the physical portion 178 and/or the light emitter 400 to move in substantially any angle in a 360° spherical coordinate system. The first axis 174a and the second axis 174b may be orthogonal to one another.

Similarly, the display control 196 (see FIG. 4A) may include tilt or pivot functions about one or more axes to position the display 126 to better enable people in the set 116 to interact with the interactive device 102, and/or to make the user 101 in the second location 112 to appear more present in the first location 110 or set 116. The display 126 may show the user's 101 face such as to convey emotion or reaction of the user 101. The display 126 may display an icon such as an emoji that indicates the mood or emotion of the user 101. The content displayed on the display 126 may be coordinated with the motion of the display control 196. For example, if the user 101 is happy and in agreement, the display 126 may show an appropriate icon and the display control 196 may move the display 126 up and down as though the user 101 were nodding in agreement. In some embodiments, the display 126 may display words, images, or text that indicate the user 101 is "present" via the system 100. For example, the display 126 may display "ON AIR" or may indicate whom is communicating from the second location 112 via the interactive device 102. Similarly the speaker 176 may make announcements to the same effect.

With reference to FIG. 4C, an example of a light emitter 400 is shown. The light emitter 400 may be a beam expander that spreads a laser beam to make the beam more perceptible while also reducing concerns about safely using the lasers in a busy environment where the light 182 could potentially be directed into the eyes of people on the set 116. The light emitter 400 may be coupled to an actuator control 184 as previously described. The light emitter 400 may include a light source such as a laser, light emitting diode, or the like. Typically, the light source will have a wattage and frequency that are suitable for eye safety. The light source may direct light 182 to an objective lens 404 and/or to an image lens 402. The objective lens 404 and the image lens 402 may be separated by a distance 406. The objective lens 404 may have a diameter Di and the image lens may have a diameter D₀. In many examples, D₀ will be larger than Di, spreading the light 182 emitted by the light source. The objective lens 404 may have an included angle θ_{I} and diameter Di that captures a substantial portion of the light 182 emitted by the light source. The light emitter 400 may have a focal length that is the sum of the focal lengths of the objective lens 404 and the image lens 402.

The light emitter 400 may be adjustable, such as to change the light 182 from a collimated output (e.g., laser) to an attenuated or diffuse light 182. The light emitter 400 may be automatically adjustable, such as via an input from the user 101.

In some embodiments, the light emitter 400 may generate one or more shapes, such as a circle, square, rectangle, triangle, starburst, or other shapes. In some embodiments, the user 101 may draw a shape using a user device 104 or user device 106 and the light emitter 400 may replicate the shape at the first location 110. Such shapes may have the advantage of differentiating objects the user 101 wishes to discuss, or grabbing the attention of people on the set 116.

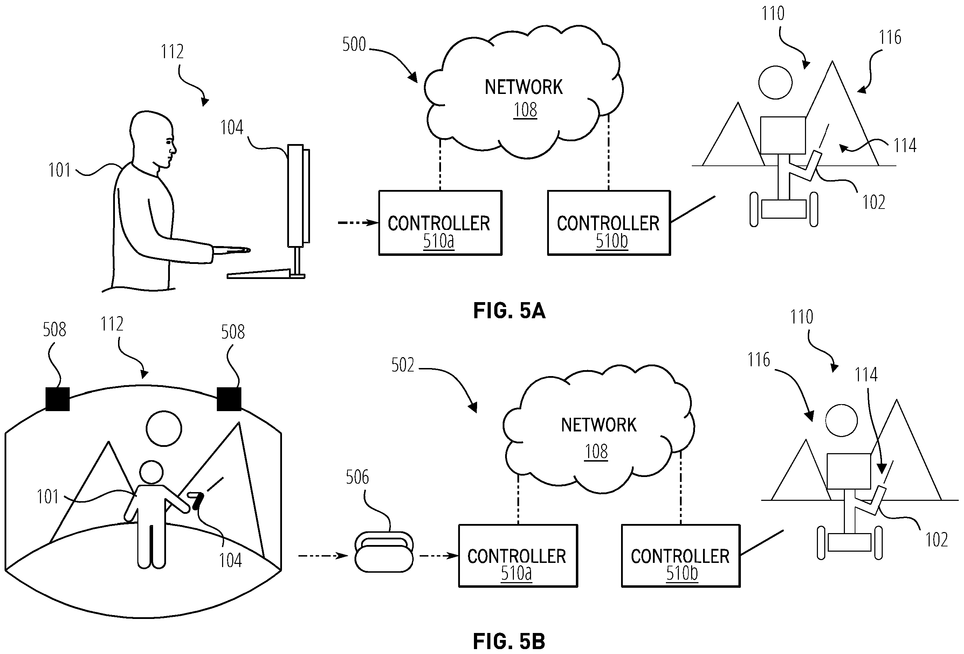

With reference to FIG. 5A - FIG. 5C, specific embodiments of a system 100 are shown. FIG. 5A shows a system 500 which is an embodiment of a system 100. In the system 500, the user 101 controls the interactive device 102 from the second location 112 with a user device 104 such as a laptop, desktop, smart phone, tablet, or the like. The user device 104 may communicate electronically with a controller 510a also in the second location 112. The controller 510a may be in communication with another controller 510b and/or the interactive device 102 via the network 108, or directly. The controller 510b may be in the first location 110, such as a set 116.

The controller 510a converts inputs from the user device 104 into information that can be transmitted to (e.g., via the network 108), and interpreted by the interactive device 102. For example, the user device 104 may receive user 101 input indicating a direction that the actuator 114 of the interactive device 102 should point or where/how the interactive device 102 should move. The controller 510a may receive an audio or video feed, or text input from the user 101 via the user device 104 and transmit the same over the network 108, either in its original format, or converted into a format useable by the interactive device 102. The controller 510b may receive information transmitted from the user device 104 (e.g., via the controller 510a and/or the network 108) and may convert and/or transmit that information to the interactive device 102. The interactive device 102 may interpret information received from the controller 510b and correspondingly actuate the actuator 114, move the actuator 114, display video at the display 126, play sounds over the speaker 176, move the mobility module 124, or take any other action disclosed herein. The speaker 176 may be amplified to enable the user 101 to talk over noise in the first location 110. In some embodiments, the interactive device 102 may be in communication with a public address or other sound system in the first location 110 such that the voice of the user 101 may be heard throughout the first location 110. In some embodiments, the interactive device 102 may be in communication with local communications headsets. For example, sound may not be audibly broadcast to the first location 110, but may be kept on a private sound channel played on one or more headsets. The headsets may include microphones that can relay audio information to the interactive device 102 and back to the remote location (e.g., second location 112).

Similarly, the controller 510b may receive information from the interactive device 102 such as a video and/or audio feed, position information and the like and convert and/or transmit the same to the user device 104, either directly, or via the controller 510a and the network 108.

FIG. 5B shows a system 502 which is an embodiment of a system 100. The system 502 is similar to the system 500 described herein, but may differ in that the second location 112 includes a replica or display of the first location 110 (such as a set 116) with which the user 101 may interact in a more immersive and expressive way. The system 502 may be a virtual or augmented reality system that is more immersive than the system 500. For example, the second location 112 in the system 502 may include a mockup or display (such as a virtual reality environment) that replicates or simulates the first location 110. The user 101 may stand, sit, or walk within the second location 112 and a tracker 506 including one or more sensors 508 may track movement of the user's 101 inputs into the user device 104. The movements of the user device 104 may be transmitted into positional information by the tracker 506 and transmitted to the controller 510a and ultimately to the interactive device 102 to replicate or process, as discussed with respect to the system 500. The user device 104 used with the system 502 may be a pointer, such as a laser pointer or stylus that the user 101 uses to input movement or attention information into the system 502. In some embodiments, the pointer may include a gyroscope, accelerometer, or other device that enables the sensors 508 to track position and orientation of the pointer in the first location 110. Advantages of the system 502 may include the ability of the user 101 to more naturally interact with the second location 112, the set 116, and/or the interactive device 102.

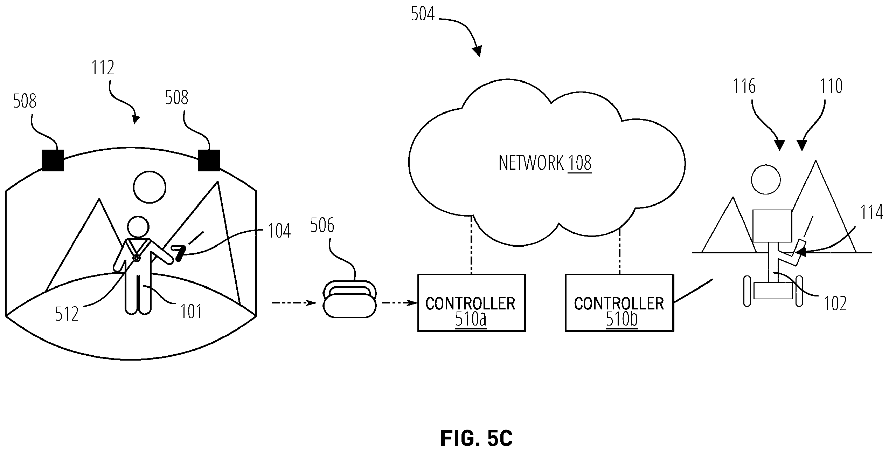

FIG. 5C shows a system 504 which is an embodiment of a system 100. The system 504 is similar to the system 500 and the system 502 described herein, but may differ in that the second location 112, a tracker 506 with one or more markers 512 can track not only movement of the user's 101 arm manipulating the user device 104, but of the user's 101 movements generally. The system 504 may be a virtual or augmented reality system that is more immersive than the system 500. The system 504 may be enabled for volumetric capture (e.g., real time volumetric capture) of the user's 101 movements, posture, gestures, expression, etc. For example, the user 101 may wear one or more markers 512, such as motion capture markers 512 that enable the sensors 508 to track the position, gestures, and location of the user's 101 body within the second location 112. These positions, gestures, and locations may be converted into positionally data by the tracker 506 and transmitted to the interactive device 102, either directly or via the controller 5 10a, controller 510b. The interactive device 102 may, via the mobility module 124, the actuator control 184, the actuator 114, the display control 196, display 126, and the speaker 176 replicate the movements of the user 101 in the second location 112 at the first location 110. In some embodiments, the second location 112 in the system 504 may include a flooring system that enables the user 101 to walk freely about the second location 112 without running into walls and objects, etc. In some embodiments, the tracker 506 may be a markerless tracker that uses the sensors 508 to determine the position, gestures, and location of a user 101 without the marker 512. The user device 104 may communicate with the interactive device 102 as discussed with respect to the system 500 and/or the system 502. An advantage of the system 504 may be increased reflection of normal and natural movement of the user 101 on the receiving side (e.g., the first location 110 or set 116). Any of the communication links in the systems 500, 502, 504 may be wired or wireless.

FIG. 6 illustrates a block diagram of an illustrative computing device 180 that may be included as the user devices 104, 106, controllers 510a, 510b, and/or a portion of the interactive device 102. The computing device 180 may be used to implement or execute one or more components of the system 100, system 500, system 502, system 504, and/or method 150.

The computing device 180 may include one or more processing elements 162 that may be any type of electronic components capable of processing, receiving, and/or transmitting instructions. For example, the processing element 162 may be a central processing unit, microprocessor, processor, graphics processor, or microcontroller. Additionally, it should be noted that some of the components of the computing device 180 may be controlled by a first processor and other components may be controlled by a second processor, where the two processors may or may not be in communication with one another.

The computing device 180 may also include memory component 164, which may include one or more memory components configured to store instructions for the processing element 162 and/or data. The memory component 164 may include, for example, magnetooptical storage, read-only memory, random access memory, erasable programmable memory, flash memory, or a combination of one or more types of memory components.

A display 126 provides visual feedback in the first location 110, e.g., to users in the first location 110 or on the set 116. Optionally, the display 126 may act as an input element to enable a user to control, manipulate, and/or calibrate various components of the system 100. The display 126 may be a liquid crystal display, plasma display, light emitting diode display, organic light emitting diode display, and/or other suitable display. In embodiments where the display 126 is used as an input, the display 126 may include one or more touch or input sensors, such as capacitive touch sensors, resistive grid, or the like. In some embodiments, such as when the user device 104 is configured as a head mounted display, the display 126 may be configured to be worn by a user.

The I/O interface 168 allows a user to interact with the computing device 180, as well as with other devices or services. The I/O interface 168 may include integrated devices that provide commands or inputs and display output information to the user 101 and/or to the first location 110 or the set 116, e.g., for users in the first location 110. The configuration of the I/O interface 168 may be varied based on the type of user device 104 (e.g., desktop computer vs. head mounted display).

The network interface 170 provides communication to and from the computing device 180 to other devices (e.g., enables communication to the network 108). The network interface 170 includes one or more communication protocols, such as, but not limited to Wi-Fi, Ethernet, Bluetooth, cellular, and so on. The network interface 170 may also include one or more hardwired components, such as a Universal Serial Bus (USB) cable, or the like. The configuration of the network interface 170 depends on the types of communication desired and may be modified to communicate via Wi-Fi, Bluetooth, and so on.

The external devices 172 are one or more devices that can be used to provide various inputs and/or outputs to the computing device 180, but that may be configured separately from the computing device 180 itself, e.g., mouse, microphone, keyboard, trackpad, or the like. The external devices 172 may be local or remote and may vary as desired. In some examples, the external device 172 may also include one or more additional sensors.

The methods described herein may be implemented by a computer system comprising a processor. The processor may be configured to perform any of the methods described herein by executing instructions. Those instructions may be provided on a computer readable medium. Thus, there is disclosed a computer readable medium comprising instructions which, when executed by a computing system, cause the computing system to perform any of the methods described herein. The computer readable medium may be non-transitory, or may be transitory (e.g., an electrical signal transmitted over a wire, or an electromagnetic wave).

The methods and systems are described herein with reference to certain applications for interactive environments. However, these techniques are equally applicable to other types of applications, including those where the commanding user may be in the same location as the interactive device, but may be remotely (e.g. indirectly) positioning the interactive device and actuator. In methodologies directly or indirectly set forth herein, various steps and operations are described in one possible order of operation but those skilled in the art will recognize the steps and operation may be rearranged, replaced, or eliminated without necessarily departing from the spirit and scope of the present invention. It is intended that all matter contained in the above description or shown in the accompanying drawings shall be interpreted as illustrative only and not limiting. Changes in detail or structure may be made without departing from the spirit of the invention as defined in the appended claims.

Any description of a particular component being part of a particular embodiment, is meant as illustrative only and should not be interpreted as being required to be used with a particular embodiment or requiring other elements as shown in the depicted embodiment.

All relative and directional references (including top, bottom, side, front, rear, and so forth) are given by way of example to aid the reader's understanding of the examples described herein. They should not be read to be requirements or limitations, particularly as to the position, orientation, or use unless specifically set forth in the claims. Connection references (e.g., attached, coupled, connected, joined, and the like) are to be construed broadly and may include intermediate members between a connection of elements and relative movement between elements. As such, connection references do not necessarily infer that two elements are directly connected and in fixed relation to each other, unless specifically set forth in the claims.

The present disclosure teaches by way of example and not by limitation. Therefore, the matter contained in the above description or shown in the accompanying drawings should be interpreted as illustrative and not in a limiting sense. The following claims are intended to cover all generic and specific features described herein, as well as all statements of the scope of the present method and system, which, as a matter of language, might be said to fall there between.

Aspects and features of the present disclosure are set out in the following numbered clauses.
1. A telepresence system comprising:
   an interactive device located at a first location;
   a user device located at a second location separate from the first location, wherein the user device is configured to receive a user input;
   an actuator communicatively coupled to the user device and the interactive device, the actuator being configured to generate a physical output at the first location based on the user input at the second location.
2. The telepresence system of clause 1, wherein the actuator comprises a light emitter including one or more of a laser, a light-emitting diode, a fluorescent light, an incandescent light, an infrared light source, an ultraviolet light source, and is configured to identify an area or object within the first location by illumination.
3. The telepresence system of clause 2, wherein the light emitter further comprises:
   an objective lens; and
   an image lens.
4. The telepresence system of clause 1, wherein the actuator comprises one or more of a virtual output to the user device, a mechanical pointer, or a fluid emitter.
5. The telepresence system of clause 1, wherein the actuator comprises an actuator control configured to change a position of the actuator relative to the interactive device.
6. The telepresence system of clause 5, wherein the actuator control comprises a first pivot configured to move about a first axis and a second pivot configured to move about a second axis orthogonal to the first axis.
7. The telepresence system of clause 1, wherein the first location comprises at least one of a content production set, a remote scouting location, a conference room.
8. The telepresence system of clause 1, wherein the interactive device further comprises a mobility module configured to move the interactive device in the first location.
9. The telepresence system of clause 8, wherein the interactive device further comprises one or more sensors configured to detect an obstacle, and the mobility module is configured to avoid the obstacle.
10. The telepresence system of clause 8, wherein the mobility module is configured to move the interactive device while in contact with a surface in the first location, or through air in the first location.
11. The telepresence system of clause 1, wherein the interactive device comprises:
   a base;
   a mobility module coupled to the base and configured to move the interactive device in the first location;
   a support structure extending from the base; and
   an actuator control coupled to the support structure; wherein
      the actuator is coupled to, and independently moveable relative to, the support structure by the actuator control,
      the mobility module and the actuator control are communicatively coupled to the user device and configured to receive the user input,
      the mobility module is configured to move the interactive device based on the user input, and
      the actuator control is configured to actuate the actuator based on the user input.
12. A method of interacting with a remote environment comprising:
   communicatively coupling at least one user device in the remote environment and an interactive device in a local environment;
   receiving a user command at the at least one user device;
   transmitting the user command to the interactive device;
   actuating an actuator of the interactive device to generate a physical output in the remote environment based on the user command.
13. The method of clause 12, wherein the actuator comprises a light emitter including one or more of a laser, a light-emitting diode, a fluorescent light, an incandescent light, an infrared light, or an ultraviolet light, and the method further comprises identifying an area or an object within the local environment by illumination.
14. The method of clause 12, wherein generating the physical output in the local environment comprises providing a virtual output to the user device, actuating a mechanical pointer, or emitting a fluid.
15. The method of clause 12, further comprising changing, via an actuator control of the actuator, a position of the actuator relative to the interactive device.
16. The method of clause 12, further comprising changing, via an actuator control of the actuator, a position of the actuator relative to the interactive device by rotating at least one of a first pivot of the actuator control about a first axis or a second pivot of the actuator control about a second axis orthogonal to the first axis.
17. The method of clause 12, further comprising calibrating the interactive device by aligning a physical location of the actuator with an interactive control feature.
18. The method of clause 12, further comprising calibrating the interactive device by detecting a location of the physical output within the local environment and adjusting a location of an interactive control feature to the location of the physical output.
19. The method of clause 12, wherein actuating the actuator comprises directing the physical output toward an object or a person within the local environment based on the user command.
20. An interactive device for a telepresence system comprising:
   a base;
   a mobility module coupled to the base and configured to move the interactive device in a first location;
   a support structure extending from the base;
   an actuator; and
   an actuator control coupled to the support structure and the actuator; wherein:
      the actuator is coupled to, and independently moveable relative to, the support structure by the actuator control,
      the mobility module and the actuator control are communicatively coupled to a user device and configured to receive a user input from the user device,
      the mobility module is configured to move the interactive device based on the user input, and
      the actuator control is configured to actuate the actuator based on the user input.

## Claims

1. A telepresence system comprising:
an interactive device located at a first location; and
an actuator communicatively coupled to a user device located at a second location separate from the first location and to the interactive device, the actuator being configured to generate a physical output at the first location based on a user input received by the user device at the second location.

2. The telepresence system of claim 1, wherein the actuator comprises a light emitter including one or more of a laser, a light-emitting diode, a fluorescent light, an incandescent light, an infrared light source, an ultraviolet light source, and is configured to identify an area or object within the first location by illumination, optionally wherein the light emitter further comprises:
an objective lens; and
an image lens.

3. The telepresence system of any preceding claim, wherein the actuator comprises one or more of a virtual output to the user device, a mechanical pointer, or a fluid emitter.

4. The telepresence system of any preceding claim, wherein the actuator comprises an actuator control configured to change a position of the actuator relative to the interactive device, optionally wherein the actuator control comprises a first pivot configured to move about a first axis and a second pivot configured to move about a second axis orthogonal to the first axis.

5. The telepresence system of any preceding claim, wherein the first location comprises at least one of a content production set, a remote scouting location, a conference room.

6. The telepresence system of any preceding claim, wherein the interactive device further comprises a mobility module configured to move the interactive device in the first location, optionally wherein at least one of:
the interactive device further comprises one or more sensors configured to detect an obstacle, and the mobility module is configured to avoid the obstacle; or
the mobility module is configured to move the interactive device while in contact with a surface in the first location, or through air in the first location.

7. The telepresence system of any preceding claim, wherein the interactive device comprises:
a base;
a mobility module coupled to the base and configured to move the interactive device in the first location;
a support structure extending from the base; and
an actuator control coupled to the support structure; wherein
the actuator is coupled to, and independently moveable relative to, the support structure by the actuator control,
the mobility module and the actuator control are communicatively coupled to the user device and configured to receive the user input,
the mobility module is configured to move the interactive device based on the user input, and
the actuator control is configured to actuate the actuator based on the user input.

8. A method of interacting with a remote environment, comprising:
receiving a user command at least one user device in a remote environment communicatively coupled to an interactive device in a local environment;
transmitting the user command to the interactive device;
causing an actuator of the interactive device to generate a physical output in the remote environment based on the user command.

9. The method of claim 8, wherein the actuator comprises a light emitter including one or more of a laser, a light-emitting diode, a fluorescent light, an incandescent light, an infrared light, or an ultraviolet light, and the method further comprises identifying an area or an object within the local environment by illumination.

10. The method of any of claims 8 to 9, wherein generating the physical output in the local environment comprises providing a virtual output to the user device, causing a mechanical pointer to be actuated, or causing a fluid to be emitted.

11. The method of any of claims 8 to 10, further comprising changing, via an actuator control of the actuator, a position of the actuator relative to the interactive device, optionally by rotating at least one of a first pivot of the actuator control about a first axis or a second pivot of the actuator control about a second axis orthogonal to the first axis.

12. The method of any of claims 8 to 11, further comprising at least one of:
calibrating the interactive device by causing alignment of a physical location of the actuator with an interactive control feature; or
calibrating the interactive device by detecting a location of the physical output within the local environment and adjusting a location of an interactive control feature to the location of the physical output.

13. The method of any of claims 8 to 12, wherein causing the actuator to generate the physical output comprises directing the physical output toward an object or a person within the local environment based on the user command.

14. A computer readable medium comprising instructions which, when executed by a computing system, cause the computing system to perform the method of any of claims 8 to 13, or a computing system configured to perform the method of any of claims 8 to 13.

15. An interactive device for a telepresence system comprising:
a base;
a mobility module coupled to the base and configured to move the interactive device in a first location;
a support structure extending from the base;
an actuator; and
an actuator control coupled to the support structure and the actuator; wherein:
the actuator is coupled to, and independently moveable relative to, the support structure by the actuator control,
the mobility module and the actuator control are communicatively coupled to a user device and configured to receive a user input from the user device,
the mobility module is configured to move the interactive device based on the user input, and
the actuator control is configured to actuate the actuator based on the user input.
